(19) Europäisches Patentamt / European Patent Office / Office européen des brevets

(11) **EP 4 703 429 A1**

(12) **EUROPEAN PATENT APPLICATION**
published in accordance with Art. 153(4) EPC

(43) Date of publication:
**04.03.2026 Bulletin 2026/10**

(21) Application number: **24795536.2**

(22) Date of filing: **07.02.2024**

(51) International Patent Classification (IPC):
*C08L 67/04* (2006.01)      *C08L 67/02* (2006.01)
*C08L 29/04* (2006.01)      *C08K 7/26* (2006.01)
*C08K 5/56* (2006.01)      *C08K 5/092* (2006.01)
*C08K 5/09* (2006.01)      *C08K 5/11* (2006.01)
*C08L 23/12* (2006.01)      *C08L 23/06* (2006.01)

(52) Cooperative Patent Classification (CPC):
Y02W 30/62

(86) International application number:
**PCT/CN2024/076678**

(87) International publication number:
**WO 2024/222148 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023 CN 202310458172**

(71) Applicant: **ZHONG LIAN RONG XIN (BEIJING) TECHNOLOGY DEVELOPMENT CO., LTD.**
**Beijing 102400 (CN)**

(72) Inventor: **ZHANG, Haibo**
**Beijing 102400 (CN)**

(74) Representative: **Latscha Schöllhorn Partner AG**
**Grellingerstrasse 60**
**4052 Basel (CH)**

(54) **DEGRADATION AUXILIARY AGENT FOR DEGRADING PP AND PE**

(57) The present invention relates to the field of polymer materials, and relates to a degradation auxiliary agent for degrading PP and PE. The degradation auxiliary agent mainly comprises the following raw materials in parts by weight: 3-9 parts of a photosensitizer, 2-5 parts of mesoporous silica, 50-76 parts of a biodegradable polymer, and 1-5 parts of an organic decomposition auxiliary agent. According to the inventor, mesoporous silica having the porous microsphere characteristic is used as a photosensitizer carrier, to introduce the photosensitizer into the biodegradable polymer and then into a polymer such as PP, PE or PP/PE alloy, thereby lowering the degree of precipitation of the photosensitizer from the polymer and improving the degradation performance of the polymer. In addition, both the photosensitizer and the organic decomposition auxiliary agent are wrapped in the biodegradable polymer, and thus after a polymer in which the degradation auxiliary agent is added is discarded, the organic decomposition auxiliary agent will make use of its ability to recruit microorganisms for decomposition to decompose the biodegradable polymer more quickly, thereby increasing the exposure of the photosensitizer and greatly accelerating decomposition of the polymer.

FIG 4

EP 4 703 429 A1

## Description

### Technical Field

The present application relates to the field of polymer materials, specifically to additives developed for breaking down polypropylene or polyethylene.

### Background Art

Polypropylene (PP) is a semi-crystalline thermoplastic characterized by its colourless, odourless, non-toxic, translucent, and lightweight properties, produced via the polymerization of propylene. Polyethylene (PE) is a crystalline thermoplastic resin formed through the polymerization of ethylene. Both PP and PE are crucial general-purpose resins. PP offers advantages such as low specific gravity, exceptional stress cracking resistance, wear resistance, good heat resistance, and chemical stability, though it exhibits poor brittleness and low-temperature impact resistance. On the other hand, PE provides excellent electrical insulation, chemical resistance, low-temperature resistance, and good processing fluidity, but it has notable drawbacks including poor heat resistance, susceptibility to atmospheric aging, and easy stress cracking. Consequently, polymer blends like PP/PE blends offer broader commercial applications and are increasingly researched. However, PP, PE, and their blends pose environmental pollution challenges as waste. Thus, enhancing the degradation performance of these plastics to mitigate environmental impact has become a focus.

### Summary of Invention

The present application offers additives that facilitate the breakdown of polypropylene (PP) or polyethylene (PE), addressing environmental pollution caused by discarded resin materials.

The present application provides additives for breaking down PP or PE. The additives mainly comprise the following materials in parts by weight: 3-9 parts of a photosensitizer, 2-5 parts of mesoporous silica, 50-76 parts of a biodegradable polymer and 1-5 parts of an organic decomposition aid.

The above technical solution provided by the embodiment of the present application has at least the following advantages compared with the prior art:

Most polymers do not absorb light energy with wavelengths above 285 nm. However, if a photosensitive group or a chemical additive with a photosensitive effect is added to the polymer, the process of photochemical reaction can be accelerated. These substances generate free radicals after absorbing light energy, or transfer excited state energy to the polymer to generate free radicals, and then promote the oxidation reaction of the polymer material, so that the polymer is rapidly degraded. Although it is relatively simple and quick to add photosensitizer directly into PP, PE or PP/PE blends, and the processing cost is also lower, after such simple addition behaviour, the photosensitizer is easy to diffuse and precipitate from the surface of the polymer, and migrate to the material in contact with the polymer, which will reduce the decomposition effect of the polymer after it is discarded. Therefore, this application is intended to improve the precipitation of photosensitizers on the premise of simplifying the processing technology as much as possible, thereby improving the degradation performance of the polymer. Mesoporous silica is a porous microsphere material with a pore size between 2 and 50 nm, which has good strength, thermal stability, and high specific surface area. The invention used the porous microspheres of mesoporous silica as a photosensitizer carrier to first introduce the photosensitizer into the biodegradable polymer, and then into polymers such as PP, PE or PP/PE blends, suppresses photosensitizer migration from the polymer matrix, thereby enhancing degradation efficiency. At the same time, the photosensitizer and the organic decomposition aid are both encapsulated in the biodegradable polymer. When the polymer to which such a degradation aid is added is discarded, the organic decomposition aid will use its ability to recruit microorganisms to decompose, so that the biodegradable polymer is decomposed more quickly, the exposure of the photosensitizer is increased, and the decomposition of the polymer is greatly accelerated.

The photosensitizer is selected from the group consisting of ferric eleostearate, dodecylferrocene, benzophenone, stearic acid, cerium stearate, iron stearate and nickel stearate.

The biodegradable polymer is selected from the group consisting of polylactic acid, polyhydroxyalkanoate, polybutylene succinate, polycaprolactone, PBAT (copolymer of butylene adipate and butylene terephthalate), polyvinyl alcohol and poly-L-lactic acid.

The organic decomposition aid is selected from the group consisting of lactose, galactose, vitamin E polyethylene glycol succinate and diisostearyl malate.

The invention further comprises the following raw materials in parts by weight: 0.5-1.6 parts of a dispersant and 0.8-2 parts of tricarboxylic acid, wherein the dispersant is selected from polypropylene wax and/or polyethylene wax.

Furthermore, the invention particularly comprises the following raw materials in parts by weight: 4-6 parts of photosensitizer, 2.5-3.6 parts of mesoporous silica, 58-66 parts of biodegradable polymer, 2-3 parts of organic decomposition aid, 0.9-1.2 parts of dispersant and 1.3-1.8 parts of tricarboxylic acid.

Additionally, the ratio of the prodegradant additives in PP or PE or PP/PE blend is 10 wt% - 30 wt%.

Furthermore, the prodegradant additives are prepared by the following steps:

The photosensitizer, the mesoporous silica, the dispersant, and the tricarboxylic acid are mixed, and then the organic decomposition aid and the biodegradable polymer are added to obtain the degradation aid.

Furthermore, the mesoporous silica, the dispersant and the tricarboxylic acid are stirred and mixed at 130-170° C. for 50-70 minutes, and then the photosensitizer is added, the rotation speed is increased by 50-80 rpm, and the mixture is stirred and mixed for 60-90 minutes, and then extruded and granulated to obtain a first auxiliary material, and then the first auxiliary material is mixed with the organic decomposition auxiliary agent and the biodegradable polymer to obtain the degradation auxiliary agent.

Furthermore, the organic decomposition aid is heated until it is melted, and then the first auxiliary material is quickly added at a rotation speed of 100-150 rpm. After the addition, the temperature is lowered at a rate of 5-10°C/min until it reaches room temperature, and then the biodegradable polymer is added, and the material is discharged into a twin-screw extruder for extrusion and granulation to obtain the degradation aid.

The above technical solution provided by the embodiment of the present application has at least the following advantages compared with the prior art:

Most polymers do not absorb light energy with wavelengths above 285 nm. However, if a photosensitive group or a chemical additive with a photosensitive effect is added to the polymer, the process of photochemical reaction can be accelerated. These substances generate free radicals after absorbing light energy, or transfer excited state energy to the polymer to generate free radicals, and then promote the oxidation reaction of the polymer material, so that the polymer is rapidly degraded. Although it is relatively simple and quick to add photosensitizer directly into PP, PE or PP/PE blends, and the processing cost is also lower, after such simple addition behavior, the photosensitizer is easy to diffuse and precipitate from the surface of the polymer, and migrate to the material in contact with the polymer, which will reduce the decomposition effect of the polymer after it is discarded. Therefore, the inventors of this application intend to improve the precipitation of photosensitizers on the premise of simplifying the processing technology as much as possible, thereby improving the degradation performance of the polymer. Mesoporous silica is a porous microsphere material with a pore size between 2 and 50 nm, which has good strength, thermal stability, and high specific surface area. The inventors used the porous microspheres of mesoporous silica as a photosensitizer carrier to first introduce the photosensitizer into the biodegradable polymer, and then into polymers such as PP, PE, or PP/PE blends, thereby improving the degree of precipitation of the photosensitizer from the polymer and thus improving the degradation performance of the polymer. At the same time, the photosensitizer and the organic decomposition aid are both encapsulated in the biodegradable polymer. When the polymer to which such a degradation aid is added is discarded, the organic decomposition aid will use its ability to recruit microorganisms to decompose, so that the biodegradable polymer is decomposed more quickly, the exposure of the photosensitizer is increased, and the decomposition of the polymer is greatly accelerated.

**Brief Description of Drawings**

The accompanying drawings, which are incorporated in and constitute a part of this specification, illustrate embodiments consistent with the present application and, together with the description, explain the principles of the present application.

In order to more clearly illustrate the embodiments of the present application or the technical solutions in the prior art, the drawings required for use in the embodiments or the description of the prior art will be briefly introduced below. Obviously, for ordinary person skilled in the art, other drawings can be obtained based on these drawings without imagination.

FIG. 1 is a photograph of a test sample in test sample 1 according to an embodiment of the present application.

FIG. 2 is a graph showing the cumulative emission of carbon dioxide according to an embodiment of the present application.

FIG. 3 is a graph showing the biodegradability of the embodiment of the present application.

FIG. 4 is a photograph of the test sample provided in an example of the present application after being mixed with compost, and a photograph after being stacked for 140 days.

FIG. 5 is a graph showing the time-cumulative carbon dioxide emission (g/container) of empty, sample and reference materials provided in the examples of the present application.

FIG. 6 is a time-biodegradation percentage (%) curve of the sample and reference materials provided in the examples of the present application.

**Detailed Description of Embodiments**

To clearly explain the purpose, technical solutions, and advantages of the present application's embodiments, the following detailed descriptions will be provided in conjunction with the accompanying drawings. These described embodiments represent only a portion of the present application's embodiments, and those other embodiments derived by those skilled in the art without inventive effort, based on these described embodiments, are also within the scope of this application's protection.

Unless otherwise noted, the various raw materials, reagents, instruments, and equipment used in this application are commercially available or can be prepared using known methods.

The present application provides additives for breaking down polypropylene (PP) and polyethylene (PE). The degradation aid primarily consists of the following raw materials in parts by weight:
3-9 parts of photosensitizer, 2-5 parts of mesoporous silica, 50-76 parts of biodegradable polymer and 1-5 parts of organic decomposition aid.

The organic decomposition aid used in this invention attracts microorganisms from the natural environment, thereby promoting the accelerated decomposition of the biodegradable polymer by these microorganisms.

The biodegradable polymer used in this invention is derived from renewable natural resources such as microorganisms, animals, and plants. It possesses the same physical properties as traditional petroleum-based plastics and can effectively replace them. Not only is it more environmentally friendly, but its market demand is also growing significantly.

Most polymers do not absorb light energy with wavelengths above 285 nm. However, by incorporating light-sensitive groups or chemical additives with photosensitive effects into the polymer, the photochemical reaction process can be accelerated. These substances generate free radicals after absorbing light energy or transfer excited state energy to the polymer, producing free radicals that then promote the oxidation reaction of the polymer material, leading to rapid degradation. While it is relatively simple and cost-effective to add photosensitizers directly into PP, PE, or PP/PE blends, this method presents a drawback: the photosensitizers tend to diffuse and precipitate from the polymer's surface, migrating to substances in contact with the polymer. This migration reduces the decomposition effect of the polymer once discarded. To address this issue, the inventors of this application aim to enhance the retention of photosensitizers while simplifying the processing technology as much as possible, thereby improving the polymer's degradation performance.

Mesoporous silica is a porous microsphere material with a pore size between 2 and 50 nm, characterized by its strength, thermal stability, and high specific surface area. The inventor intends to leverage the porous microsphere characteristics of mesoporous silica as a carrier for photosensitizers. By incorporating the photosensitizer into the biodegradable polymer and then into polymers such as PP, PE, or PP/PE blends, the degree of precipitation of the photosensitizer from the polymer can be improved, thereby enhancing the polymer's degradation performance. Additionally, both the photosensitizer and the organic decomposition aid are encapsulated within the biodegradable polymer. When a polymer containing this degradation aid is discarded, the organic decomposition aid recruits' microorganisms to accelerate the decomposition of the biodegradable polymer. This process increases the exposure of the photosensitizer, significantly speeding up the polymer's decomposition. The combined use of the photosensitizer, biodegradable polymer, and organic decomposition aid imparts dual degradation capabilities-biodegradability and photodegradability-to PP, PE, or PP/PE blends, resulting in a rapid degradation rate.

The photosensitizer is selected from one or more of the following: eleostearic acid iron, dodecyl ferrocene, benzophenone, stearic acid, cerium stearate, ferric stearate, and nickel stearate. The inventor's experiments indicate that when the photosensitizer is chosen from eleostearic acid iron, cerium stearate, ferric stearate, or nickel stearate, the polymer degradation performance is slightly better. This improvement is likely due to the combination of polymer segments and metal ions, which results in a more intricate and stable entanglement distribution of the photosensitizer in mesoporous silica. Furthermore, this combination ensures compatibility between the photosensitizer, mesoporous silica, and polymers such as biodegradable polymers, PP, PE, or PP/PE blends, restricting the migration of the photosensitizer and mesoporous silica. The raw materials for preparing eleostearic acid iron include tung oil, ethanol, sodium hydroxide solution, and ferric chloride hexahydrate. The absorption peaks of eleostearic acid and eleostearic acid iron in the ultraviolet light range are significantly higher than those of conventional reagents. Eleostearic acid, with its three conjugated double bonds, has a broad absorption range and a stronger absorption effect on ultraviolet light. When eleostearic acid is synthesized into eleostearic acid iron, the iron ion (a photosensitive group) is added, further enhancing the range and ability of eleostearic acid to absorb ultraviolet light. The absorption range of eleostearic acid iron for ultraviolet light essentially covers the entire ultraviolet light spectrum and extends into the visible light range, thereby improving its capacity to harness energy from light. When iron ions absorb ultraviolet light, they form an excited state. These excited iron ions then react with polypropylene and polyethylene, inducing the production of numerous free radicals and accelerating the resin's degradation rate. Once the excited iron ions react with the resin to generate free radicals, they revert to their normal state and continue to absorb ultraviolet light in synergy with eleostearic acid. This cycle perpetuates, continuously prompting the resin to form new free radicals through cascade reactions, significantly improving the resin's photodegradation rate.

Furthermore, the biodegradable polymer can be selected from one or more of the following: polylactic acid (PLA), polyhydroxyalkanoate (PHA), polybutylene succinate (PBS), polycaprolactone (PCL), PBAT, polyvinyl alcohol (PVA), and poly-L-lactic acid. The biodegradable polymer serves a dual purpose: firstly, it ensures the photosensitizer is evenly distributed within the final polymer (PP, PE, or PP/PE blends), and secondly, it induces the final polymer to degrade more quickly and thoroughly.

PCL is a semi-crystalline thermoplastic resin with a crystallinity of approximately 45%. Its mechanical properties are akin to those of medium-density polyolefins, and its softness and tensile strength are comparable to nylon. The glass transition temperature of PCL ranges from -60°C to 65°C, with a melting point of 59°C to 64°C and a decomposition temperature of around 250°C. Due to its low melting point, PCL becomes soft at approximately 40°C, limiting its application range. However, the presence of lactone groups in the PCL molecule imparts good biodegradability and physiological compatibility. PCL can support the growth of fungi, serve as a carbon source for microorganisms, and slowly degrade in soil, with an average degradation time of 12-18 months, making it an excellent biodegradable polymer.

PBAT is a thermoplastic biodegradable plastic, a copolymer of butylene adipate and butylene terephthalate. It combines the properties of both PBA and PBT, offering good ductility and elongation at break, as well as excellent heat resistance and impact resistance. Additionally, PBAT boasts superb biodegradability, making it one of the most popular and widely used materials in biodegradable plastic research.

Polybutylene succinate (PBS) is a white, semi-crystalline polymer compound. Its crystallinity, which ranges from 30% to 60%, depends on its molecular structure and weight, and its crystallization temperature is 75°C. High molecular weight PBS exhibits superior mechanical properties compared to polyethylene (PE) and has a melting point of approximately 115°C, meeting the usage requirements of general plastics. PBS remains stable in dry environments, maintaining consistent performance during long storage and trial periods. Because its structural units contain easily hydrolyzed ester groups, PBS is readily decomposed and metabolized by various microorganisms or enzymes present in nature. Under conditions such as composting and contact with specific microorganisms, PBS ultimately breaks down into $CO_2$ and $H_2O$, avoiding environmental pollution. Additionally, PBS is completely biodegradable in soil, seawater, and compost, ensuring rapid degradation after use.

Poly-L-lactic acid (PLLC) is a polymer material synthesized through chemical methods, using L-lactic acid fermented from bioresources such as starch and molasses as raw materials. PLLC is a thermoplastic material that exhibits plasticity similar to polystyrene and polyester. It boasts high crystallinity, rigidity, and excellent tensile strength.

Polyvinyl alcohol (PVA) is the only vinyl polymer that can be utilized by bacteria as a carbon and energy source. Under the action of bacteria and enzymes, it can degrade by 75% within 46 days. PVA is a biodegradable polymer material that can be mass-produced at a low cost using non-petroleum routes. It boasts exceptional oil resistance, solvent resistance, and gas barrier properties, making it uniquely advantageous for food and drug packaging. Starch-based polyvinyl alcohol plastics are completely biodegradable, meaning they can be fully decomposed into low-molecular compounds by microorganisms (such as bacteria, fungi, and algae) under appropriate and time-limited natural environmental conditions.

Polylactic acid (PLA) is polymerized from lactide monomers extracted from plant sugars and can be completely degraded into water and carbon dioxide under industrial composting conditions. Polyhydroxyalkanoates (PHA) are aliphatic copolyesters synthesized by microorganisms through the fermentation of various carbon sources. These polymers are not only suitable for packaging materials and agricultural films but can also be widely used in pharmaceuticals, cosmetics, animal feed, and other fields.

Furthermore, the organic decomposition aid can be selected from one or more of the following: lactose, galactose, vitamin E polyethylene glycol succinate, and diisostearyl malate.

To further improve the uniformity of the photosensitizer dispersion, the inventors propose adding 0.5-1.6 parts by weight of a dispersant and 0.8-2 parts by weight of a tricarboxylic acid to the degradant raw material. The dispersant is selected from polypropylene wax and/or polyethylene wax.

The use of polypropylene wax and/or polyethylene wax as a dispersant not only improves the uniformity of the dispersion of the photosensitizer in the mesoporous silica but also enhances the uniform dispersion of the degradation agent in the final polymer once mixed with PP, PE, or PP/PE blends. The dispersant achieves this by leveraging the mutual attraction and entanglement of similar chain segments with polypropylene or polyethylene, ensuring that PP, PE, or PP/PE blends degrades more uniformly and rapidly. Additionally, with the aid of tricarboxylic acid as a compatibilizer, the biodegradable polymer encapsulating the photosensitizer can be more stably and quickly mixed with PP, PE, or PP/PE blends. The tricarboxylic acid can include one or more of citric acid, aconitic acid, or tricarboxylic acid.

Furthermore, the additives for degrading PP and PE provided by this invention can be formulated with the following raw materials in parts by weight: 4-6 parts of photosensitizer, 2.5-3.6 parts of mesoporous silica, 58-66 parts of biodegradable polymer, 2-3 parts of organic decomposition aid, 0.9-1.2 parts of dispersant, and 1.3-1.8 parts of tricarboxylic acid.

After repeated experiments, the inventors found that when the degradation aid provided by this invention is added to PP, PE, or a PP/PE blend at an addition ratio of 10wt%-30wt%, the degradation performance and other mechanical properties of the PP, PE, or PP/PE blend are excellent.

To enhance the performance of the degradation process for degrading PP and PE, the inventors propose the following processing steps:

The mesoporous silica, dispersant, and tricarboxylic acid are stirred and mixed at 130-170°C for 50-70 minutes to ensure uniform dispersion and reduce agglomeration. Afterward, the photosensitizer is added, the rotation speed is increased by 50-80 rpm, and stirring and mixing continue for 60-90 minutes. This increase in rotation speed allows for further dispersion of the mesoporous silica, dispersant, and tricarboxylic acid, while the photosensitizer is continuously inserted into the pores of the mesoporous silica, gradually sinking deeply into the pores. The presence of tricarboxylic acid further strengthens the bond between the photosensitizer and mesoporous silica. Continuous stirring creates a more disordered combination of the photosensitizer and mesoporous silica, making it more difficult for the photosensitizer to migrate and ensuring the polymer's degradation ability. After 60-90 minutes of stirring and mixing, the mixture is then extruded and granulated to obtain the first auxiliary material.

The organic decomposition aid is heated until it melts, after which the first auxiliary material is quickly added at a rotation speed of 100-150 rpm. Once added, the mixture is uniformly stirred at the same rotation speed while the temperature is gradually reduced at a rate of 5-10°C/min. This process allows the organic decomposition aid to gradually fix onto the surface of the first auxiliary material until it reaches room temperature. Subsequently, the biodegradable polymer is added, and the material is discharged into a twin-screw extruder for extrusion granulation. This creates an ordered three-layer structure consisting of the biodegradable polymer, organic decomposition aid, and first auxiliary material. This structure enhances the use stability of PP, PE, or PP/PE blends and ensures effective degradation performance once discarded, ultimately resulting in the formation of the degradation aid.

The present application also provides a PP, PE, or PP/PE blends that includes the aforementioned degradation additives.

The present application will be further described below in conjunction with specific embodiments. These embodiments are intended to illustrate the application and are not meant to limit its scope. Unless otherwise specified, experimental methods follow national standards. In the absence of corresponding national standards, the conditions recommended by the manufacturer are followed.

Example 1

This embodiment provides a PP composite material, consisting of 90wt% PP and 10wt% prodegradant additives. The PP composite material is obtained by blending PP with the prodegradant additives. The PP is sourced from Dongguan Fuzhong Plastic Raw Materials Co., Ltd.

The following describes the materials and the preparation of the additives:

To prepare the first auxiliary material, 5 g of mesoporous silica, a dispersant (1.6 g of polypropylene wax), and 2 g of tricarboxylic acid (aconitic acid) were stirred and mixed at 170°C for 50 minutes. Afterward, 9 g of photosensitizer (dodecylferrocene) was added, and the rotation speed was increased to 80 rpm. The mixture was then stirred and mixed for an additional 60 minutes, followed by extrusion and granulation.

The organic decomposition aid (5 g of lactose) was heated until melted. The first auxiliary material was then quickly added at a speed of 150 rpm. Afterward, the mixture was stirred at the same speed while the temperature was gradually reduced at a rate of 10°C/min until it reached room temperature. Subsequently, 76 g of biodegradable polymer (polylactic acid) was added, and the material was discharged into a twin-screw extruder for extrusion and granulation, resulting in the degradable aid.

Example 2

This embodiment provides a PP composite material, consisting of 70wt% PP and 30wt% prodegradant additives. The PP and prodegradant additives are blended to form the PP composite material. The PP is sourced from Dongguan Fuzhong Plastic Raw Materials Co., Ltd.

The following describes the materials and preparation methods of the additives:

To prepare the first auxiliary material, 2 g of mesoporous silica, 0.5 g of polypropylene wax as a dispersant, and 0.8 g of citric acid as tricarboxylic acid were stirred and mixed at 130°C for 70 minutes. Subsequently, 3 g of photosensitizer (stearic acid) was added, and the rotation speed was increased by 50 rpm. The mixture was then stirred and mixed for 90 minutes, followed by extrusion and granulation.

The organic decomposition aid (1 g of galactose) was heated until it melted. The first auxiliary material was then quickly added at a speed of 100 rpm. Afterward, the mixture was stirred at the same speed while the temperature was gradually reduced at a rate of 5°C/min until it reached room temperature. Subsequently, 50 g of biodegradable polymer (polyhydroxyalkanoate) was added, and the material was discharged into a twin-screw extruder for extrusion and granulation, resulting in the degradable aid.

Example 3

This embodiment provides a PP composite material comprising 80 wt% PP and 20 wt% prodegradant additives, blended. The PP is sourced from Dongguan Fuzhong Plastic Raw Materials Co., Ltd.

The following describes the materials and preparation methods of the additives:

To obtain the first auxiliary material, 4 g of mesoporous silica, 1.2 g of polypropylene wax (dispersant), and 1.2 g of tricarboxylic acid were stirred and mixed at 150°C for 60 minutes. Then, 6 g of ferric eleostearate (photosensitizer) was added, the rotation speed increased to 70 rpm, and the mixture was stirred for an additional 80 minutes. Next, the mixture was extruded and granulated.

To obtain the degradation additives, 3 g of vitamin E polyethylene glycol succinate (organic decomposition aid) was heated until melted. The first auxiliary material was then rapidly added at 130 rpm and stirred at that speed. The mixture was cooled to room temperature at a rate of 8°C/min. Subsequently, 61 g of polybutylene succinate (biodegradable polymer) was added, and the resulting material was extruded and granulated.

Example 4

This embodiment provides a PE composite material, consisting of 90wt% PE and 10wt% prodegradant additives. The PE composite material is obtained by blending PE with the prodegradant additives. The PE is sourced from Dongguan Yongmao Plastic Raw Materials Co., Ltd.

The following describes the materials and preparation method for the degradation aid:

To prepare the first auxiliary material, 3 g of mesoporous silica, 0.5 g of polyethylene wax (dispersant), and 0.8 g of citric acid (tricarboxylic acid) were stirred and mixed at 130°C for 70 minutes. Then, 4 g of benzophenone (photosensitizer) was added, the rotation speed was increased to 60 rpm, and the mixture was stirred for 65 minutes. Finally, the mixture was extruded and granulated.

To prepare the degradation aid, 2 g of diisostearyl malate (organic decomposition aid) was melted. The first auxiliary material was then rapidly added at 110 rpm and stirred at that speed. The mixture was cooled to room temperature at a rate of 6°C/min. Subsequently, 55 g of polycaprolactone (biodegradable polymer) was added, and the resulting material was extruded and granulated using a twin-screw extruder

Example 5

This embodiment provides a PE composite material comprising 70 wt% PE and 30 wt% prodegradant additives, blended. The PE is sourced from Dongguan Yongmao Plastic Raw Materials Co., Ltd.

The materials and preparation method for the degradation aid are as follows:

To prepare the first auxiliary material, 4 g of mesoporous silica, 0.9 g of polyethylene wax (dispersant), and a combination of tricarboxylic acids (0.8 g citric acid and 0.5 g aconitic acid) were stirred and mixed at 140°C for 65 minutes. Then, 4 g of nickel stearate (photosensitizer) was added, the rotation speed was increased to 56 rpm, and the mixture was stirred for 75 minutes. Finally, the mixture was extruded and granulated.

To prepare the degradation aid, 2 g of diisostearyl malate and 1 g of galactose (organic decomposition aids) were heated until melted. The first auxiliary material was then rapidly added at 110 rpm and stirred at that speed. The mixture was cooled to room temperature at a rate of 6°C/min. Subsequently, 45 g of polycaprolactone and 13 g of PBAT (biodegradable polymers) were added, and the resulting mixture was extruded and granulated using a twin-screw extruder.

Example 6

This embodiment provides a PE composite material comprising 85 wt% PE and 15 wt% prodegradant additives, blended. The PE is sourced from Dongguan Yongmao Plastic Raw Materials Co., Ltd.

The following describes the materials and preparation method for the degradation additives:

To prepare the first auxiliary material, 3.6 g of mesoporous silica, 1.2 g of polyethylene wax (dispersant), and a combination of tricarboxylic acids (1 g of tricarboxylic acid and 0.8 g of aconitic acid) were stirred and mixed at 140°C for 65 minutes. Then, 6 g of iron stearate (photosensitizer) was added, the rotation speed was increased to 75 rpm, and the mixture was stirred for 70 minutes. Finally, the mixture was extruded and granulated.

To prepare the degradation aid, 2 g of diisostearyl malate (organic decomposition aid) was melted. The first auxiliary material was then rapidly added at 130 rpm and stirred at that speed. The mixture was cooled to room temperature at a rate of 7°C/min. Subsequently, 33 g of polyvinyl alcohol and 33 g of poly(L-lactic acid) (biodegradable polymers) were added, and the resulting mixture was extruded and granulated using a twin-screw extruder.

Example 7

This embodiment provides a PP/PE blend material comprising 45% PP, 45% PE, and 10 wt% prodegradant additives, melt-blended using a conventional process.

The following describes the materials and preparation method for the degradation aid:

To prepare the first auxiliary material, 2.5 g of mesoporous silica, a combination of dispersants (0.5 g polyethylene wax and 0.5 g polypropylene wax), and a combination of tricarboxylic acids (1 g tricarboxylic acid and 0.8 g aconitic acid) were stirred and mixed at 140°C for 65 minutes. Then, 4 g of cerium stearate (photosensitizer) was added, the rotation speed was increased to 65 rpm, and the mixture was stirred for 70 minutes. Finally, the mixture was extruded and granulated.

To prepare the degradation aid, 2 g of diisostearyl malate and 2 g of vitamin E polyethylene glycol succinate (organic decomposition aids) were melted. The first auxiliary material was then rapidly added at 130 rpm and stirred at that speed. The mixture was cooled to room temperature at a rate of 7°C/min. Subsequently, 33 g of polyvinyl alcohol, 33 g of poly(L-lactic acid), and 4 g of polybutylene succinate (biodegradable polymers) were added, and the resulting mixture was extruded and granulated using a twin-screw extruder.

Example 8

This embodiment provides a PP/PE blend material comprising 35% PP, 35% PE, and 30 wt% prodegradant additives, melt-blended using a conventional process.

The following describes the materials and preparation method for the degradation aid:

To prepare the first auxiliary material, 4.5 g of mesoporous silica, a combination of dispersants (0.25 g of polyethylene wax and 0.25 g of polypropylene wax), and 1.3 g of tricarboxylic acid were stirred and mixed at 140°C for 65 minutes. Then, a combination of photosensitizers (4 g of cerium stearate and 3 parts of ferrous eleostearate) was added, the rotation speed was increased to 65 rpm, and the mixture was stirred for 70 minutes. Finally, the mixture was extruded and granulated.

To prepare the degradation aid, 1 g of lactose and 1.5 g of vitamin E polyethylene glycol succinate (organic decomposition aids) were melted. The first auxiliary material was then rapidly added at 130 rpm and stirred at that speed. The mixture was cooled to room temperature at a rate of 7°C/min. Subsequently, 30 g of polyvinyl alcohol and 32 g of polylactic acid (biodegradable polymers) were added, and the resulting mixture was extruded and granulated using a twin-screw extruder.

Example 9

This embodiment provides a PP/PE blend material comprising 30% PP, 45% PE, and 25 wt% prodegradant additives, melt-blended using a conventional process.

The following describes the raw materials and preparation method for the degradation aid:

To prepare the first auxiliary material, 3.1 g of mesoporous silica, a combination of dispersants (0.8 g of polyethylene wax and 0.8 g of polypropylene wax), and 0.9 g of citric acid were stirred and mixed at 140°C for 65 minutes. Then, a combination of photosensitizers (4 g of cerium stearate and 3 parts of ferrous eleostearate) was added, the rotation speed was increased to 65 rpm, and the mixture was stirred for 70 minutes. Finally, the mixture was extruded and granulated.

To prepare the degradation aid, 1 g of lactose and 1.5 g of vitamin E polyethylene glycol succinate (organic decomposition aids) were melted. The first auxiliary material was then rapidly added at 130 rpm and stirred at that speed. The mixture was cooled to room temperature at a rate of 7°C/min. Subsequently, 30 g of polycaprolactone and 30 g of polylactic acid (biodegradable polymers) were added, and the resulting mixture was extruded and granulated using a twin-screw extruder.

Reference Example 1

This example is identical to Example 3, except it lacks mesoporous silica.

Reference Example 2

This example differs from Example 6 only in that the nickel stearate photosensitizer is replaced with an equal mass of benzophenone.

Test Sample 1

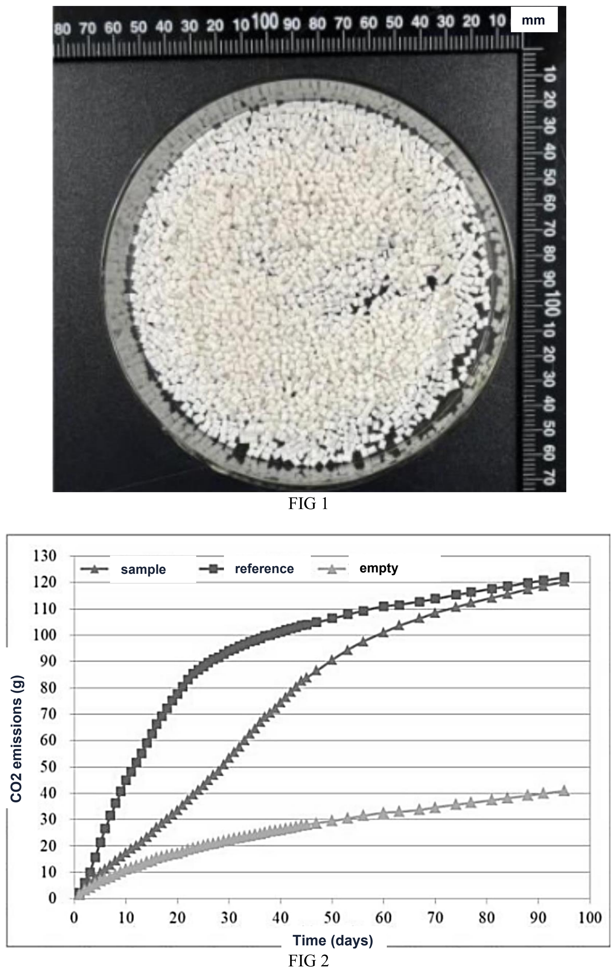

The final aerobic biodegradability of the PP composite material from Example 3 was determined.
1. Test method: The final aerobic biodegradability of the PP composite material was determined according to GB/T19277.1-2011, using the carbon dioxide evolution method under controlled composting conditions.
2. The characteristics of the test materials, reference materials, and inoculum are shown in Table 1, and photos of the test materials are shown in Figure 1.

Table 1

| / | Test material | Reference material | Inoculum |
|---|---|---|---|
| Traits | White particles | White powder | Granular |
| Pre-processing | Grind with liquid nitrogen and filter the sample through 0.25mm sieve for testing | / | Through 0.5cm sieve |
| pH value | / | / | 7.78 |
| Moisture content, % | 0.4 | 4.0 | 40.1 |
| Total dry solids content, % | 99.6 | 96.0 | 50-55 |
| Total organic carbon content, % | 44.4 | 42.8 | 20.1 |
| Total content, g/g | 0.000384 | / | 0.0147 |
| Source | Example 3 | Sinopharm Chemical Reagent Co., Ltd. | Made in the laboratory |

3. Test conditions
The test was conducted in 2L bottles with an inoculum-to-test material/reference material dry weight ratio of approximately 6:1. Decarbonated air was used for aeration, maintaining an oxygen concentration above 6% in the discharged air. The test environment was kept in the dark at a temperature of 58°C $\pm$ 2°C. Carbon dioxide production was determined by titration.
4. Table 2 presents the cumulative carbon dioxide production (g/bottle) over the course of the test. The cumulative carbon dioxide production curve is depicted in Figure 2.

Table 2

| Days | Test material | | | | Reference material | | | | Empty control | | | |
|---|---|---|---|---|---|---|---|---|---|---|---|---|
| | bottle1 | bottle 2 | bottle3 | mean | bottle 4 | bottle5 | bottle6 | mean | bottle7 | bottle8 | bottle9 | mean |
| 1 | 1.40 | 2.19 | 1.89 | 1.83 | 2.25 | 2.21 | 2.19 | 2.22 | 1.54 | 1.45 | 1.49 | 1.49 |
| 2 | 3.32 | 5.17 | 4.68 | 4.39 | 6.00 | 5.86 | 6.00 | 5.96 | 3.34 | 3.08 | 3.10 | 3.17 |
| 3 | 4.90 | 6.93 | 6.38 | 6.07 | 10.28 | 9.81 | 10.03 | 10.04 | 4.52 | 4.06 | 4.14 | 4.24 |
| 4 | 6.78 | 8.87 | 8.38 | 8.01 | 15.74 | 15.58 | 15.47 | 15.60 | 5.73 | 5.22 | 5.28 | 5.41 |
| 5 | 8.56 | 10.94 | 10.38 | 9.96 | 21.33 | 21.39 | 21.17 | 21.29 | 6.89 | 6.64 | 6.62 | 6.72 |
| 6 | 9.63 | 12.39 | 11.77 | 11.26 | 26.48 | 26.83 | 26.65 | 26.65 | 7.73 | 7.56 | 7.49 | 7.59 |
| 7 | 10.97 | 13.80 | 13.30 | 12.69 | 31.13 | 31.67 | 31.47 | 31.42 | 8.43 | 8.33 | 8.25 | 8.34 |
| 8 | 12.53 | 15.51 | 15.04 | 14.36 | 35.75 | 36.57 | 36.19 | 36.17 | 9.41 | 9.34 | 9.25 | 9.34 |
| 9 | 14.17 | 17.01 | 16.72 | 15.97 | 40.09 | 41.28 | 40.72 | 40.70 | 10.25 | 10.25 | 10.14 | 10.21 |
| 10 | 15.58 | 18.61 | 18.05 | 17.41 | 44.04 | 45.64 | 44.91 | 44.86 | 11.12 | 11.21 | 11.21 | 11.18 |
| 11 | 16.83 | 20.08 | 19.50 | 18.80 | 47.34 | 48.94 | 48.18 | 48.15 | 11.72 | 11.81 | 11.83 | 11.78 |
| 12 | 18.10 | 21.55 | 20.95 | 20.20 | 51.01 | 52.49 | 51.51 | 51.67 | 12.33 | 12.50 | 12.48 | 12.44 |
| 13 | 19.37 | 23.00 | 22.40 | 21.59 | 54.56 | 55.87 | 54.78 | 55.07 | 12.91 | 13.08 | 13.06 | 13.02 |
| 14 | 21.19 | 24.89 | 24.23 | 23.44 | 58.55 | 59.71 | 58.66 | 58.97 | 13.82 | 13.84 | 13.86 | 13.84 |
| 15 | 22.75 | 26.59 | 25.97 | 25.10 | 62.20 | 63.41 | 62.31 | 62.64 | 14.55 | 14.44 | 14.51 | 14.50 |
| 16 | 24.52 | 28.59 | 27.82 | 26.98 | 65.63 | 67.20 | 66.12 | 66.31 | 15.36 | 15.27 | 15.24 | 15.29 |
| 17 | 25.90 | 30.13 | 29.53 | 28.52 | 68.56 | 70.14 | 69.11 | 69.27 | 15.94 | 15.85 | 15.67 | 15.82 |
| 18 | 27.43 | 31.87 | 31.47 | 30.26 | 71.50 | 73.13 | 72.10 | 72.25 | 16.47 | 16.38 | 16.18 | 16.34 |
| 19 | 28.95 | 33.57 | 33.43 | 31.98 | 74.20 | 76.00 | 74.93 | 75.05 | 16.98 | 16.85 | 16.61 | 16.81 |
| 20 | 30.36 | 35.10 | 35.35 | 33.60 | 76.89 | 78.70 | 77.65 | 77.65 | 17.39 | 17.36 | 17.01 | 17.26 |
| 21 | 32.01 | 36.91 | 37.38 | 35.44 | 79.41 | 81.57 | 80.37 | 80.45 | 18.27 | 18.01 | 17.72 | 18.00 |
| 22 | 33.83 | 39.89 | 39.51 | 37.41 | 81.91 | 84.27 | 82.98 | 83.06 | 18.95 | 18.61 | 18.34 | 18.63 |
| 23 | 35.62 | 41.07 | 41.90 | 39.53 | 83.95 | 86.56 | 85.18 | 85.23 | 19.68 | 19.17 | 18.83 | 19.23 |
| 24 | 37.20 | 42.68 | 43.86 | 41.25 | 85.56 | 88.03 | 86.74 | 86.77 | 20.13 | 19.66 | 19.25 | 19.68 |
| 25 | 38.69 | 44.31 | 45.85 | 42.95 | 86.92 | 89.39 | 88.15 | 88.15 | 20.53 | 20.06 | 19.64 | 20.08 |

(continued)

| Days | Test material | | | | Reference material | | | | Empty control | | | |
|---|---|---|---|---|---|---|---|---|---|---|---|---|
| | bottle1 | bottle 2 | bottle3 | mean | bottle 4 | bottle5 | bottle6 | mean | bottle7 | bottle8 | bottle9 | mean |
| 26 | 80.45 | 46.09 | 48.09 | 44.87 | 88.35 | 90.78 | 89.56 | 89.56 | 20.91 | 20.55 | 20.06 | 20.51 |
| 27 | 42.08 | 47.90 | 50.41 | 46.80 | 89.50 | 91.85 | 90.68 | 90.68 | 21.35 | 20.95 | 20.46 | 20.92 |
| 28 | 43.35 | 49.28 | 52.24 | 48.29 | 90.37 | 92.80 | 91.60 | 91.60 | 21.75 | 21.35 | 20.70 | 21.26 |
| 29 | 45.65 | 51.86 | 55.14 | 50.88 | 91.60 | 93.96 | 92.78 | 92.78 | 22.33 | 21.93 | 21.28 | 21.84 |
| 30 | 47.69 | 54.16 | 57.97 | 53.27 | 92.85 | 95.03 | 93.92 | 93.92 | 22.84 | 22.36 | 21.78 | 22.33 |
| 31 | 49.79 | 56.34 | 60.42 | 55.52 | 93.89 | 95.97 | 94.77 | 94.88 | 23.25 | 22.75 | 22.22 | 22.74 |
| 32 | 51.51 | 58.48 | 63.03 | 57.67 | 94.79 | 96.75 | 95.59 | 95.71 | 23.67 | 23.14 | 22.64 | 23.15 |
| 33 | 53.36 | 60.98 | 65.93 | 60.09 | 95.70 | 97.55 | 96.42 | 96.56 | 24.00 | 23.47 | 23.04 | 23.50 |
| 34 | 55.13 | 68.78 | 68.71 | 62.45 | 96.64 | 98.34 | 97.36 | 97.45 | 24.57 | 23.87 | 23.43 | 23.96 |
| 35 | 56.90 | 71.11 | 71.11 | 64.60 | 97.29 | 98.81 | 97.96 | 98.02 | 24.97 | 24.08 | 23.65 | 24.23 |
| 36 | 59.01 | 68.28 | 73.88 | 67.06 | 98.22 | 99.57 | 98.75 | 98.85 | 25.39 | 24.50 | 24.05 | 24.67 |
| 37 | 60.79 | 70.27 | 76.10 | 69.05 | 98.96 | 100.31 | 99.63 | 99.63 | 25.98 | 25.04 | 24.59 | 25.20 |
| 38 | 62.07 | 71.71 | 77.85 | 70.54 | 99.43 | 100.72 | 100.05 | 100.07 | 26.29 | 25.45 | 24.95 | 25.56 |
| 39 | 63.73 | 73.37 | 79.74 | 72.28 | 100.04 | 101.19 | 100.63 | 100.62 | 26.50 | 25.67 | 25.16 | 25.78 |
| 40 | 65.91 | 75.42 | 81.98 | 74.44 | 100.69 | 101.77 | 101.22 | 101.23 | 26.90 | 26.07 | 25.40 | 26.12 |
| 41 | 68.08 | 77.41 | 84.05 | 76.51 | 101.34 | 102.35 | 101.82 | 101.83 | 27.30 | 26.36 | 25.79 | 26.48 |
| 42 | 70.17 | 79.17 | 85.89 | 78.41 | 101.94 | 102.92 | 102.41 | 102.42 | 27.69 | 26.75 | 26.19 | 26.88 |
| 43 | 72.40 | 81.19 | 87.84 | 80.48 | 102.55 | 103.50 | 103.01 | 103.02 | 28.09 | 27.15 | 26.66 | 27.30 |
| 44 | 74.57 | 83.41 | 89.82 | 82.60 | 103.09 | 104.06 | 103.56 | 103.57 | 28.63 | 27.69 | 27.11 | 27.81 |
| 45 | 75.97 | 84.60 | 90.87 | 83.81 | 103.49 | 104.31 | 103.85 | 103.88 | 28.85 | 27.91 | 27.33 | 28.03 |
| 47 | 79.11 | 87.34 | 93.23 | 56.56 | 104.44 | 105.25 | 104.86 | 104.85 | 29.42 | 28.50 | 27.90 | 28.61 |
| 50 | 83.54 | 91.38 | 96.76 | 90.56 | 105.96 | 106.67 | 106.34 | 106.87 | 30.36 | 29.46 | 28.77 | 29.53 |
| 53 | 87.82 | 95.27 | 99.88 | 94.32 | 107.49 | 108.15 | 107.93 | 107.86 | 31.32 | 30.50 | 29.74 | 30.52 |
| 56 | 91.59 | 98.52 | 102.44 | 97.52 | 108.81 | 109.47 | 109.33 | 109.20 | 32.18 | 31.44 | 30.61 | 31.41 |
| 60 | 95.52 | 101.98 | 105.54 | 101.01 | 110.50 | 111.07 | 111.10 | 110.89 | 33.34 | 32.59 | 31.67 | 32.53 |

| Days | Test material | | | | Reference material | | | | Empty control | | | |
|---|---|---|---|---|---|---|---|---|---|---|---|---|
| | bottle1 | bottle 2 | bottle3 | mean | bottle 4 | bottle5 | bottle6 | mean | bottle7 | bottle8 | bottle9 | mean |
| 6 3 | 98.6 9 | 104. 72 | 107. 60 | 103. 67 | 111. 10 | 111. 65 | 111. 70 | 111. 48 | 33.7 3 | 32.9 9 | 32.0 7 | 32.9 3 |
| 6 7 | 101. 93 | 107. 37 | 109. 93 | 106. 41 | 112. 39 | 112. 80 | 112. 89 | 112. 69 | 34.5 1 | 33.7 8 | 32.8 3 | 33.7 1 |
| 7 0 | 104. 35 | 109. 28 | 111. 71 | 108. 45 | 113. 51 | 113. 96 | 114. 02 | 113. 83 | 35.4 5 | 34.5 4 | 33.6 2 | 34.5 4 |
| 7 4 | 106. 73 | 111. 43 | 113. 59 | 110. 58 | 114. 88 | 115. 27 | 115. 50 | 115. 22 | 36.5 6 | 35.6 6 | 34.7 4 | 35.6 5 |
| 7 7 | 108. 64 | 113. 12 | 115. 03 | 112. 26 | 116. 00 | 116. 21 | 116. 62 | 116. 28 | 37.5 0 | 36.4 3 | 35.4 9 | 36.4 8 |
| 8 1 | 110. 37 | 114. 96 | 117. 26 | 114. 20 | 117. 32 | 117. 51 | 117. 93 | 117. 59 | 38.4 6 | 37.4 1 | 36.4 3 | 37.4 3 |
| 8 4 | 111. 89 | 116. 28 | 118. 42 | 115. 53 | 118. 25 | 118. 89 | 118. 89 | 118. 53 | 39.2 1 | 38.1 7 | 37.1 9 | 38.1 9 |
| 8 8 | 113. 91 | 118. 03 | 120. 08 | 117. 34 | 119. 55 | 120. 31 | 120. 31 | 119. 87 | 40.2 1 | 39.1 7 | 38.2 0 | 39.1 9 |
| 9 1 | 115. 38 | 119. 34 | 121. 23 | 118. 65 | 120. 35 | 121. 29 | 121. 29 | 120. 72 | 40.9 6 | 39.9 3 | 39.8 1 | 39.9 0 |
| 9 5 | 117. 35 | 120. 85 | 122. 67 | 120. 29 | 121. 50 | 122. 58 | 122. 58 | 121. 96 | 41.9 2 | 40.8 7 | 39.7 7 | 40.8 5 |

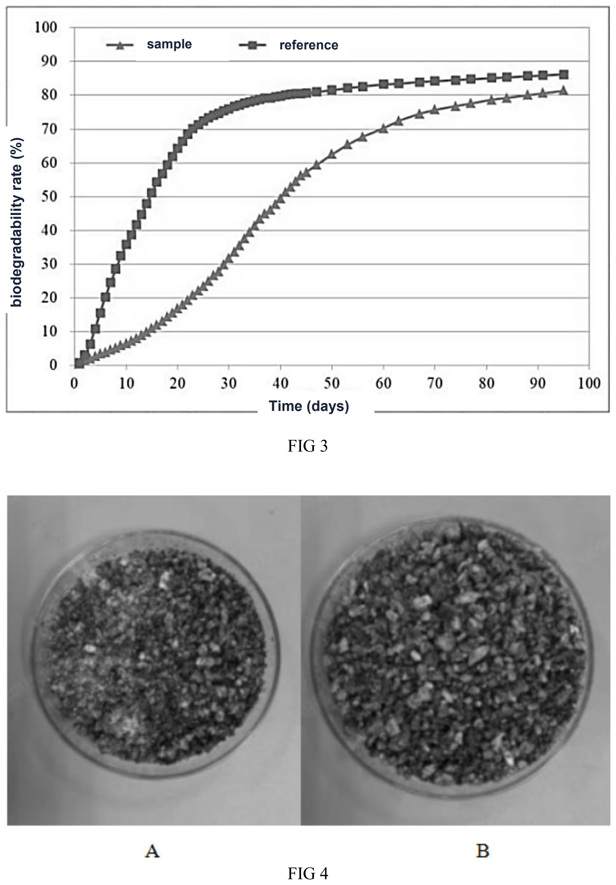

5. The biological decomposition rate results are presented in Table 3, with the corresponding curve shown in Figure 3.

Table 3

| Days | Test material | | | | Reference material | | | |
|---|---|---|---|---|---|---|---|---|
| | bottle1 | bottle 2 | bottle3 | mean | bottle 4 | bottle5 | bottle6 | mean |
| 1 | -0.1 | 0.7 | 0.4 | 0.4 | 0.8 | 0.8 | 0.7 | 0.8 |
| 2 | 0.1 | 2.0 | 1.5 | 1.2 | 3.0 | 2.9 | 3.0 | 3.0 |
| 3 | 0.7 | 2.8 | 2.2 | 1.9 | 6.4 | 5.9 | 6.2 | 6.2 |
| 4 | 1.4 | 3.5 | 3.0 | 2.7 | 11.0 | 10.8 | 10.7 | 10.8 |
| 5 | 1.9 | 4.3 | 3.7 | 3.3 | 15.5 | 15.6 | 15.3 | 15.5 |
| 6 | 2.1 | 4.9 | 4.3 | 3.8 | 20.1 | 20.4 | 20.2 | 20.2 |
| 7 | 2.7 | 5.6 | 5.1 | 4.5 | 24.2 | 24.8 | 24.6 | 24.5 |
| 8 | 3.3 | 6.3 | 5.8 | 5.1 | 28.1 | 28.9 | 28.5 | 28.5 |
| 9 | 4.0 | 7.0 | 6.7 | 5.9 | 31.7 | 33.0 | 32.4 | 32.4 |
| 10 | 4.5 | 7.6 | 7.0 | 6.4 | 34.9 | 36.6 | 35.8 | 35.8 |
| 11 | 5.2 | 8.5 | 7.9 | 7.2 | 37.8 | 39.5 | 38.6 | 38.6 |
| 12 | 5.8 | 9.3 | 8.7 | 7.9 | 14.0 | 42.5 | 41.5 | 41.7 |
| 13 | 6.5 | 10.2 | 9.6 | 8.8 | 44.1 | 45.5 | 44.4 | 44.7 |
| 14 | 7.5 | 11.3 | 10.6 | 9.8 | 47.5 | 48.7 | 47.6 | 47.9 |
| 15 | 8.4 | 12.4 | 11.7 | 10.9 | 50.7 | 51.9 | 50.8 | 51.1 |
| 16 | 9.5 | 13.6 | 12.8 | 12.0 | 53.5 | 55.1 | 54.0 | 54.2 |
| 17 | 10.3 | 14.6 | 14.0 | 13.0 | 56.0 | 57.7 | 56.6 | 56.8 |
| 18 | 11.3 | 15.9 | 15.5 | 14.2 | 58.6 | 60.3 | 59.2 | 59.4 |
| 19 | 12.4 | 17.2 | 17.0 | 15.5 | 60.9 | 62.9 | 61.7 | 61.8 |
| 20 | 13.4 | 18.3 | 18.5 | 16.7 | 65.3 | 65.3 | 64.1 | 64.2 |
| 21 | 14.3 | 19.4 | 19.8 | 17.9 | 65.2 | 67.5 | 66.2 | 66.3 |
| 22 | 15.6 | 20.7 | 21.4 | 19.2 | 67.2 | 69.7 | 68.3 | 68.4 |
| 23 | 16.8 | 22.4 | 23.2 | 20.8 | 68.7 | 71.5 | 70.0 | 70.1 |
| 24 | 17.9 | 23.5 | 24.8 | 22.1 | 70.0 | 72.6 | 71.2 | 71.3 |
| 25 | 19.1 | 24.8 | 26.4 | 23.4 | 71.0 | 73.6 | 72.3 | 72.3 |
| 26 | 20.4 | 26.2 | 28.2 | 24.9 | 72.1 | 74.6 | 73.3 | 73.3 |
| 27 | 21.7 | 27.6 | 30.2 | 26.5 | 72.8 | 75.3 | 74.1 | 74.1 |
| 28 | 22.6 | 28.7 | 31.7 | 27.7 | 73.4 | 76.0 | 74.7 | 74.7 |
| 29 | 24.4 | 30.7 | 34.1 | 29.7 | 74.1 | 76.6 | 75.3 | 75.3 |
| 30 | 26.0 | 32.6 | 36.5 | 31.7 | 74.9 | 77.2 | 76.0 | 76.0 |
| 31 | 27.7 | 34.4 | 38.6 | 33.6 | 75.6 | 77.8 | 76.5 | 76.6 |
| 32 | 29.0 | 36.2 | 40.8 | 35.3 | 76.1 | 78.2 | 76.9 | 77.1 |
| 33 | 30.6 | 38.4 | 43.4 | 37.5 | 76.7 | 78.6 | 77.4 | 77.6 |
| 34 | 31.9 | 40.5 | 45.8 | 39.4 | 77.2 | 79.0 | 78.0 | 78.0 |
| 35 | 33.4 | 42.5 | 48.0 | 41.3 | 77.6 | 79.2 | 78.3 | 78.4 |
| 36 | 35.2 | 44.7 | 50.4 | 43.4 | 78.1 | 79.6 | 78.7 | 78.8 |
| 37 | 36.4 | 46.1 | 52.1 | 44.9 | 78.3 | 79.8 | 79.0 | 79.0 |

(continued)

| Days | Test material | | | | Reference material | | | |
|---|---|---|---|---|---|---|---|---|
| | bottle1 | bottle 2 | bottle3 | mean | bottle 4 | bottle5 | bottle6 | mean |
| 41 | 42.6 | 52.1 | 58.9 | 51.2 | 79.5 | 80.6 | 80.0 | 80.0 |
| 42 | 44.3 | 53.5 | 60.4 | 52.8 | 79.7 | 80.8 | 80.2 | 80.2 |
| 43 | 46.2 | 55.2 | 62.0 | 54.4 | 79.9 | 80.9 | 80.4 | 80.4 |
| 44 | 47.9 | 56.9 | 63.5 | 56.1 | 79.9 | 81.0 | 80.5 | 80.5 |
| 45 | 49.1 | 57.9 | 64.3 | 57.1 | 80.3 | 81.0 | 80.5 | 80.6 |
| 47 | 51.7 | 60.1 | 66.2 | 59.3 | 80.5 | 81.4 | 81.0 | 81.0 |
| 50 | 55.3 | 63.3 | 68.8 | 62.5 | 81.2 | 81.9 | 81.6 | 81.6 |
| 53 | 58.7 | 66.3 | 71.0 | 65.3 | 81.7 | 82.4 | 82.2 | 82.1 |
| 56 | 61.6 | 68.7 | 72.7 | 67.7 | 82.2 | 82.9 | 82.8 | 82.6 |
| 60 | 64.5 | 71.1 | 74.7 | 70.1 | 82.8 | 83.4 | 83.4 | 83.2 |
| 63 | 67.3 | 73.5 | 76.4 | 72.4 | 83.0 | 83.6 | 83.6 | 83.4 |
| 67 | 69.8 | 75.4 | 78.0 | 74.4 | 83.6 | 84.0 | 84.1 | 83.9 |
| 70 | 71.5 | 76.5 | 79.0 | 75.7 | 83.9 | 84.3 | 84.4 | 84.2 |
| 74 | 72.8 | 77.6 | 79.8 | 76.7 | 84.1 | 84.6 | 84.8 | 84.5 |
| 77 | 73.9 | 78.5 | 80.4 | 77.6 | 84.5 | 84.7 | 85.1 | 84.7 |
| 81 | 74.7 | 79.4 | 81.7 | 78.6 | 84.8 | 85.0 | 85.5 | 85.1 |
| 84 | 75.4 | 79.9 | 82.1 | 79.2 | 85.0 | 85.2 | 85.7 | 85.3 |
| 88 | 76.5 | 80.7 | 82.8 | 80.0 | 85.3 | 85.5 | 86.2 | 85.7 |
| 91 | 77.3 | 81.3 | 83.3 | 80.6 | 85.4 | 85.6 | 86.4 | 85.8 |
| 95 | 78.3 | 81.9 | 83.8 | 81.3 | 85.6 | 86.0 | 86.8 | 86.1 |

6. At the conclusion of the 95-day test, the biodegradability of the test material was 81.3%, based on triplicate values of 78.3%, 81.9%, and 83.8%. The relative biodegradability was 94.4%.

7. Conclusion: The sample's relative biodegradability (94.4%) satisfied the $\geq$90% requirement outlined in both GB/T 41010-2021 and DB46/T 505-2020.

Test Sample 2

Testing the Biodegradability of the PE Composite Material in Example 6 under controlled composting.

1. Test basis: GB/T 19277.1-2011
2. The test results are summarized in Table 4 below.

Table 4

| Serial number | Test items | Unit | | Test results | Index | Test conclusion | Detection method |
|---|---|---|---|---|---|---|---|
| 1 | Biodegradation (140days) | Average biodegradation rate | % | 75.4 | $\geq$60 | Conform | GB/T 19277.1-2011 |
| | | Relative decomposition rate | % | 91.2 | $\geq$90 | Conform | GB/T 19277.1-2011 |
| | | Volatile solid content | % | 56.2 | $\geq$51 | Conform | GB/T 19277.1-2011 |

(continued)

| Test instruction: |
| --- |
| 1. Testing equipment: Intelligent constant temperature water bath, electric balance, total organic carbon analyser, box-type resistance furnace, etc. |
| 2. Environmental conditions: 20°C, (50-52)%RH |
| 3. Other information: The test results of the above test items also meet the requirements of GB/T41010-2-21 |

3. Test principle

This method is designed to determine the ultimate aerobic biodegradability and disintegration of a test material under conditions simulating intense aerobic composting. The inoculum employed is obtained from a stable, mature compost, ideally derived from the compost of organic matter from municipal solid waste. The test material is combined with the inoculum and introduced into a static composting container. Within this container, the mixture is subjected to intense aerobic composting under specified conditions of temperature, oxygen concentration, and humidity. The test period is limited to a maximum duration of six months.

The products of the aerobic biodegradation of the test material include carbon dioxide, water, mineralized inorganic salts, and new biomass. Throughout the test period, the evolved carbon dioxide is continuously monitored and measured, and the quantity produced is determined. The biodegradation percentage is subsequently calculated as the quotient of the actual quantity of carbon dioxide produced by the test material and the theoretical quantity of carbon dioxide that the material is capable of producing.

The theoretical release of carbon dioxide is calculated from the measured total organic carbon (TOC) content. The percentage of biodegradation is determined exclusive of the carbon that has been assimilated into new cell biomass, as this carbon is not metabolized to carbon dioxide during the test period.

4. Test materials

4.1 Samples

Name: PE composite material provided in Example 6, made into a plastic bag (film)

Appearance: solid

Storage conditions: room temperature

4.2 Reference substances

Reference materials

Name: Microcrystalline cellulose (column chromatography FCC)

Reference number: 68005761

Batch number: 20210720

Source: Sinopharm Chemical Reagent Co., Ltd.

Molecular formula: $(C_6H_{10}O_5)n$

Molecular weight: (162.14)n

CAS No.: 9004-34-6

Appearance: White or off-white powder

Storage conditions: Store in a dry place at room temperature

4.3 Inoculum

Name: Aerobic composting
Source: Homemade

Age: 3 months

Preliminary treatment: Screen through a 0.5 cm sieve to remove impurities and inert substances.

4.4 Test conditions

The test was carried out at a constant temperature of 58°C±2°C, weak light, and without any steam that may affect the growth of microorganisms.

5. Test methods

(1) Aerate the test system with water-saturated air without $CO_2$ at a flow rate of 0.05 L/min and conduct the test at 58°C ±2°C.

(2) Measure the $O_2$ concentration in the reaction vessel twice a day for the first week, and the number of measurements can be reduced thereafter. If necessary, adjust
Air flow. $CO_2$ absorption was measured once a day for the first 45 days and twice a week thereafter.

(3) Determination of $CO_2$:
Sodium hydroxide absorption method: When measuring $CO_2$, remove the sodium hydroxide absorption bottle that is directly connected to it for measurement, and move the remaining two absorption bottles forward in sequence to connect them to the anti-backflow device, and connect a newly prepared sodium hydroxide absorption bottle at the end. The removed absorption bottle is titrated with HCl standard solution.

(4) Check the air tightness of the test device every day.

(5) The mixture in the test container is mixed by inversion and shaking every week. At the same time, the pH of the mixture is measured and the following properties are observed: the odor of the exhaust gas from the test container, the moisture, color, and mold formation of the compost, and the structural changes and degree of disintegration of the test material.

(6) Calculate the theoretical release of carbon dioxide

The theoretical carbon dioxide release ($ThCO_2$) produced by the test material in each compost container is calculated according to formula (1) and expressed in grams (g).

$$ThCO_2 = M_{ToT} \times C_{ToT} \times 44/12 \ (1)$$

wherein

$M_{ToT}$: total dry solids in the test material added to the compost container at the beginning of the test, in grams (g);

$C_{ToT}$: ratio of total organic carbon to total dry solids in the test material, expressed in grams per gram (g/g);

44 and 12: represent the molecular weight of carbon dioxide and the atomic weight of carbon respectively.

(7) Calculation of biodegradability

During each measurement period, the biodegradation percentage Dt of the test material is calculated based on the cumulative amount of carbon dioxide released using formula (2)
(%):

$$Dt = [(CO_2)_T - (CO_2)_B]/ ThCO_2 \times 100 \ (2)$$

wherein

$(CO_2)_T$: the cumulative amount of carbon dioxide released from each compost container containing the test mixture, in grams per container (g/container);

$(CO_2)_B$: the average value of the cumulative carbon dioxide released by the empty containers, in grams per container (g/container);

$ThCO_2$: The theoretical release of carbon dioxide produced by the test material, in grams per container (g/container).

If the relative deviation of each result is less than 20%, the average biodegradation percentage is calculated, otherwise the value of each compost container is used separately.
The biodegradability of the reference material is calculated using the same method.

6. Test results

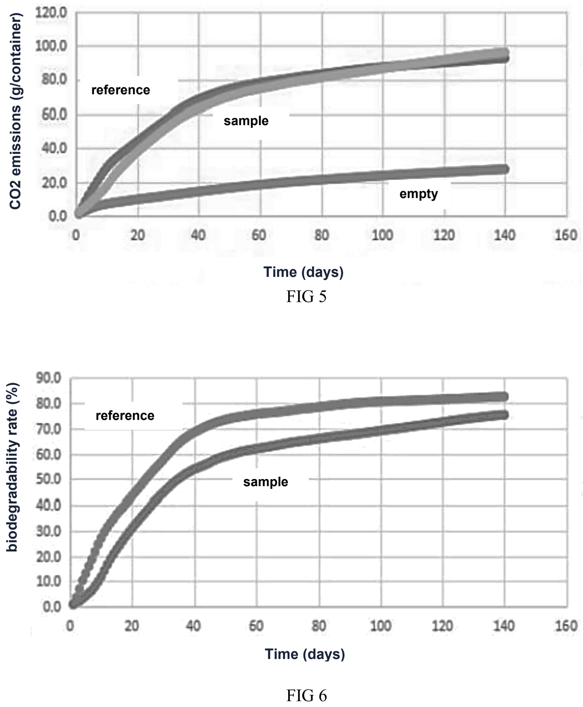

The test results are shown in Figures 4, 5 and 6. Figure 4A is a photo of the test sample after mixing with compost, and Figure 4 B is a photo after 140 days. Figure 5 is a time-cumulative carbon dioxide production (g/container) curve of empty, sample and reference material. Figure 6 is a time-biodegradation percentage (%) curve of sample and reference material.

(1) The biodegradation percentages of the three reaction bottles of the reference material at the end of the test (140 days) were 82.63%, 82.75% and 82.55%, respectively, with an average of 82.6%. The relative deviations of the biodegradation percentages of the three reaction bottles were 0.04%, 0.18% and 0.06%, respectively, all less than 20%.

(2) The biodegradation percentages of the three reaction bottles of the test sample at the end of the test (140 days) were: 75.40%, 75.27% and 75.54% respectively; the average biodegradation percentage was: 75.4%. The relative deviations of the biodegradation percentages of the three reaction bottles were 0.01%, 0.17% and 0.18% respectively; all less than 20%. Relative decomposition rate: 91.2%. The volatile solid content of the sample was: 56.2%.

(3) The average decomposition rate is: 75.4%, ≥60%, which is qualified; the relative decomposition rate is: 91.2%, ≥90%, which is qualified; the organic component (volatile solid content) is: 56.2%, ≥51%, which is qualified.

Test Sample 3

Analysis of degradation behavior of samples provided in the examples under simulated natural environment.

1. Test method

The degradation behavior of the samples provided in Example 1, Example 3, Example 4, Example 6, Example 9, Comparative Example 1, and Comparative Example 2 was studied by simulating the light and rain environment exposed in the natural environment using an ultraviolet aging box (Tianjin Yonglida Material Testing Machine Co., Ltd.). The seven samples provided in the prepared embodiments and comparative examples were made into films according to the national standard GB/T 1040.2, and cut into standard strips, which were placed in an ultraviolet aging box for degradation. Spray for 10 minutes every 12 hours, take out the samples at 5 days, 10 days, 15 days, 20 days, 25 days, and 30 days, and dry them at 65°C for 4 hours. Five parallel samples were made for each sample.

2. Mechanical properties analysis

The standard tensile specimens prepared according to the standard GB/T 1040.2 were tested on the QJ210A-1000N universal testing machine produced by Shanghai Qingji Instrument Technology Co., Ltd. for the tensile properties of the sample films before and after degradation, with a tensile rate of 2 mm/min. Five specimens were tested in each group, and the average value was obtained. The maximum tensile force reduction rate of the samples is shown in Table 5, which shows that the mechanical properties of the samples provided in Example 3 are particularly significantly reduced, and the degradation performance is more prominent.

Table 5

| sample / time | Sample 1 | Sample 3 | Sample 4 | Sample 6 | Sample 9 | Reference 1 | Reference 2 |
|---|---|---|---|---|---|---|---|
| 5 days | 29.87% | 35.15% | 30.16% | 33.28% | 30.45% | 23.12% | 28.34% |
| 10 days | 66.57% | 75.20% | 68.73% | 72.36% | 69.13% | 61.35% | 63.11% |
| 15 days | 89.11% | 100% | 90.14% | 100% | 92.13% | 87.23% | 88.46% |
| 20 days | 100% | 100% | 100% | 100% | 100% | 100% | 100% |
| 25 days | 100% | 100% | 100% | 100% | 100% | 100% | 100% |
| 30 days | 100% | 100% | 100% | 100% | 100% | 100% | 100% |

3. Gel chromatography (GPC)

The molecular weight distribution and molecular weight of the sample were determined using a gel chromatograph (1200 SERIES) produced by Agilent Technologies, USA. Sample preparation: The sample was dissolved in chloroform, filtered through an ultra-microporous filter membrane with a syringe, and 2 ml was injected for testing. Chloroform was used as solvent and polystyrene was used as the standard sample.

Following a 30-day degradation period in the aging box, a significant reduction in the molecular weight of the samples was observed. The samples prepared according to Examples 3 and 6 exhibited the greatest decrease in number average molecular weight, registering reductions of 86.39% and 83.61%, respectively. These reductions were greater than those observed for all other sample groups.

In summary, the degradation aid disclosed in the present application provides an effective means for degrading resins such as PP, PE, and PP/PE blends. The simplicity of the production process and the low cost of materials render this degradation aid suitable for industrial-scale production.

The presentation of numerical ranges in this application is exemplary for the purpose of convenience and brevity, and should not be interpreted as imposing rigid limitations on the scope of the invention. It is to be understood that the description of a range, such as from 1 to 6, constitutes a specific disclosure of all possible sub-ranges contained therein (e.g., from 1 to 3, from 1 to 4, from 2 to 4, etc.), as well as each individual numerical value within the stated range (e.g., 1, 2, 3, 4, 5, and 6). Furthermore, any numerical range indicated herein is intended to encompass all cited numbers, whether fractional or integer, within the defined limits of the range.

The foregoing description constitutes specific embodiments of the present application, provided for the purpose of enabling those skilled in the art to understand and practice the invention. It is to be understood that various modifications to these embodiments will be readily apparent to those skilled in the art, and that the general principles defined herein may be applied to other embodiments without departing from the spirit or scope of the present application. Consequently, the present application is not to be construed as being limited to the specific embodiments illustrated and described, but rather is intended to encompass the fullest extent consistent with the principles and novel features for which protection is claimed.

**Claims**

1. Additives for degrading polypropylene (PP) or polyethylene (PE), comprising, by weight: 3 to 9 parts photosensitizer, 2 to 5 parts mesoporous silica, 50 to 76 parts biodegradable polymer, and 1 to 5 parts organic decomposition aid.

2. The additives of claim 1, wherein the photosensitizer is selected from the group consisting of ferric eleostearate, dodecylferrocene, benzophenone, stearic acid, cerium stearate, iron stearate, and nickel stearate.

3. The additives of claim 1, wherein the biodegradable polymer is selected from the group consisting of polylactic acid, polyhydroxyalkanoate, polybutylene succinate, polycaprolactone, PBAT, polyvinyl alcohol, and poly-L-lactic acid.

4. The additives of claim 1, wherein the organic decomposition aid is selected from the group consisting of lactose, galactose, vitamin E polyethylene glycol succinate, and diisostearyl malate.

5. The additives of claim 1, further comprising, by weight: 0.5 to 1.6 parts of a dispersant and 0.8 to 2 parts of a tricarboxylic acid, wherein the dispersant is selected from the group consisting of polypropylene wax, polyethylene wax, and mixtures thereof.

6. The additives of claim 5, wherein the additives particularly comprising, by weight: 4 to 6 parts photosensitizer, 2.5 to 3.6 parts mesoporous silica, 58 to 66 parts biodegradable polymer, 2 to 3 parts organic decomposition aid, 0.9 to 1.2 parts dispersant, and 1.3 to 1.8 parts tricarboxylic acid.

7. The additives in any claims 1 to 6, wherein the additives are present in an amount of 10 wt% to 30 wt% of the total weight of PP, PE, or PP/PE blends.

8. Method of preparing additives according to claim 5, the method comprises the steps of:

   mixing the photosensitizer, the mesoporous silica, the dispersant and the tricarboxylic acid; and
   adding the organic decomposition aid and the biodegradable polymer to obtain the additives.

9. The method of claim 8, wherein the process for preparing the additives comprises the steps of:

   stirring and mixing the mesoporous silica, dispersant, and tricarboxylic acid at a temperature ranging from 130°C to 170°C for a period of 50 to 70 minutes;
   adding the photosensitizer and increasing the rotation speed by 50 rpm to 80 rpm;
   stirring and mixing the resulting mixture for a period of 60 to 90 minutes;
   extruding and granulating the mixture to obtain a first auxiliary material; and
   mixing the first auxiliary material with the organic decomposition aid and the biodegradable polymer to obtain the additives.

10. The method of claim 9, further comprises the steps of:

    heating the organic decomposition aid until melted;
    rapidly adding the first auxiliary material to the melted organic decomposition aid at a rotational speed of 100 to 150 rpm;
    cooling the resulting mixture to room temperature at a rate of 5°C/min to 10°C/min;
    adding the biodegradable polymer to the cooled mixture; and
    extruding and granulating the resulting material using a twin-screw extruder to obtain the degradation aid.

FIG 1

FIG 2

FIG 3

FIG 4

FIG 5

FIG 6

## INTERNATIONAL SEARCH REPORT

| International application No. |
|---|
| **PCT/CN2024/076678** |

**A.  CLASSIFICATION OF SUBJECT MATTER**

C08L67/04(2006.01)i;  C08L67/02(2006.01)i;  C08L29/04(2006.01)i;  C08K7/26(2006.01)i;  C08K5/56(2006.01)i;  C08K5/092(2006.01)i;  C08K5/09(2006.01)i;  C08K5/11(2006.01)i;  C08L23/12(2006.01)i;  C08L23/06(2006.01)i

According to International Patent Classification (IPC) or to both national classification and IPC

**B.  FIELDS SEARCHED**

Minimum documentation searched (classification system followed by classification symbols)

IPC: C08L,C08K

Documentation searched other than minimum documentation to the extent that such documents are included in the fields searched

Electronic data base consulted during the international search (name of data base and, where practicable, search terms used)

CNABS; CNTXT; DWPI; WPABS; WPABSC; ENTXTC; ENTXT; CNKI; Web of science: 光敏剂, 介孔二氧化硅, 二氧化硅, 降解聚合物, 可降解聚合物, 聚乳酸, 聚羟基脂肪酸酯, 聚丁二酸丁二醇酯, 聚己内酯, PBAT, 聚乙烯醇, 分解助剂, 分解剂, 乳糖, 半乳糖, 维生素E聚乙二醇琥珀酸酯, 二异硬脂醇苹果酸酯, photosensitizer, silica, degradable polymer, polylactic acid, polyhydroxyalkanoate, polybutylene succinate, polycaprolactone, polyvinyl alcohol, decomposer, lactose, galactose, vitamin E polyethylene glycol succinate, diisostearyl malate

**C.  DOCUMENTS CONSIDERED TO BE RELEVANT**

| Category* | Citation of document, with indication, where appropriate, of the relevant passages | Relevant to claim No. |
|---|---|---|
| PX | CN 116178921 A (ZHONGLIAN RONGXIN (BEIJING) TECHNOLOGY DEVELOPMENT CO., LTD.) 30 May 2023 (2023-05-30) entire document | 1-10 |
| A | US 2021309848 A1 (SINGULAR SOLUTIONS INC.) 07 October 2021 (2021-10-07) description, paragraphs 8-40 | 1-10 |
| A | KR 100639106 B1 (SHIN, H. C. et al.) 31 October 2006 (2006-10-31) entire document | 1-10 |
| A | KR 20130140347 A (SHIN, H. C. et al.) 24 December 2013 (2013-12-24) entire document | 1-10 |
| A | CN 109575536 A (ZIBO AIMGO PLASTICS & CHEMICALS CO., LTD.) 05 April 2019 (2019-04-05) entire document | 1-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 March 2024** | **27 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/076678** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 114395190 A (YUEYANG XINGLONG PETROCHEMICAL CO., LTD.) 26 April 2022 (2022-04-26)<br>entire document | 1-10 |

Form PCT/ISA/210 (second sheet) (July 2022)

**INTERNATIONAL SEARCH REPORT**
Information on patent family members

International application No.

**PCT/CN2024/076678**

| Patent document cited in search report | | | Publication date (day/month/year) | Patent family member(s) | | | Publication date (day/month/year) |
|---|---|---|---|---|---|---|---|
| CN | 116178921 | A | 30 May 2023 | CN | 116178921 | B | 27 June 2023 |
| US | 2021309848 | A1 | 07 October 2021 | US | 11820881 | B2 | 21 November 2023 |
| KR | 100639106 | B1 | 31 October 2006 | | None | | |
| KR | 20130140347 | A | 24 December 2013 | KR | 101365509 | B1 | 20 February 2014 |
| CN | 109575536 | A | 05 April 2019 | CN | 109575536 | B | 30 October 2020 |
| CN | 114395190 | A | 26 April 2022 | CN | 114395190 | B | 29 July 2022 |

Form PCT/ISA/210 (patent family annex) (July 2022)

**EP 4 703 429 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 410102021 T
- GB 1927712011 T

- GB 41010221 T

**Non-patent literature cited in the description**

- *CHEMICAL ABSTRACTS*, 9004-34-6